# EUROPEAN PATENT APPLICATION

(11) **EP 4 697 213 A1**
(43) Date of publication of application: **18.02.2026**
(21) Application number: 23936658.6
(22) Date of filing: 31.08.2023
(51) Int. Cl.: G06F 21/57, G06Q 50/10

(54) **SYSTEM, METHOD, AND PROGRAM FOR INSPECTING VULNERABILITY OF WEBSITE**

(30) Priority: 08.05.2023 JP 2023076953
(71) Applicant: AEYE SECURITY LAB INC., Tokyo 101-0054 (JP)
(72) Inventor: SUGIYAMA, Toshiharu, Tokyo 101-0054 (JP); ANZAI, Masato, Tokyo 101-0054 (JP); ASAI, Ken, Tokyo 101-0054 (JP)
(74) Representative: Viering, Jentschura & Partner mbB Patent- und Rechtsanwälte
(86) International application number: PCT/JP2023/031691
(87) International publication number: WO 2024/232110

(57) **Abstract**

A vulnerability inspection server according to an embodiment of the present invention assists in inspecting a website for various vulnerabilities. The server provides, to a user who operates a user terminal communicatively connected to the server through a communication network, a vulnerability inspection service in which a website specified by the user is inspected for vulnerabilities. The server determines the type of the website, the type of multiple webpages included in the website, and/or the type of parameters in the webpages on the basis of page information on each of the webpages and inspects the website for vulnerabilities on the basis of these types. Thus, it is able not only to detect a malfunction caused by an invalid input value but also to perform appropriate inspections according to the meaning, purpose, function, or the like of the website, webpages, and/or parameters.

## Description

### [Technical Field]

The present invention relates to a system, method, and program for inspecting a website for vulnerabilities.

### [BACKGROUND ART]

Various technologies for inspecting a website for vulnerabilities have been proposed. For example, Patent Literature 1 discloses an apparatus that acquires the contents of communication between a website and a browser and analyzes the website for inherent vulnerabilities on the basis of a parameter included in the contents of the communication. Such parameter-based vulnerability detection typically involves sending a request in which a previously prepared detection pattern is applied to the parameter and performing detection on the basis of the contents of a response to the request. For example, in the case of vulnerabilities to SQL injection, the detection pattern is "'" (one single quote) or the like and includes an input value or the like constituting a statement to be sent to a database.

### [Citation List]

### [Patent Literature]

[Patent Literature] Japanese Unexamined Patent Application Publication No. 2004-310267

### [Summary of the Invention]

### [Problem to be Solved by the Invention]

Although the above conventional approach is able to detect a malfunction caused when an input value is invalid, it is not able to detect a malfunction caused when an input value is not invalid. For example, this approach is not able to detect a change that is unacceptable in terms of the specification (e.g., a change of the price of a product from 1000 yen to 100 yen on a product purchase screen).

One object of embodiments of the present invention is to assist in inspecting a website for various vulnerabilities. Other objectives of the embodiments of the present invention will become apparent upon reference to the entire description.

### [Means for Solving the Problem]

A system according to an embodiment of the present invention is a system for inspecting a website for vulnerabilities, the system including one or more computer processors. The one or more computer processors perform operations including acquiring page information on a webpage included in the website, determining at least one of a type of the website, a type of the webpage, and a type of a parameter in the webpage on the basis of the page information, and inspecting the website for vulnerabilities on the basis of the at least one of the types.

A method according to an embodiment of the present invention is a method for inspecting a website for vulnerabilities, the method being performed by one or more computers. The method includes acquiring page information on a webpage included in the website, determining at least one of a type of the website, a type of the webpage, and a type of a parameter in the webpage on the basis of the page information, and inspecting the website for vulnerabilities on the basis of the at least one of the types.

A program according to an embodiment of the present invention is a program for inspecting a website for vulnerabilities. The program causes one or more computers to perform operations including acquiring page information on a webpage included in the website, determining at least one of a type of the website, a type of the webpage, and a type of a parameter in the webpage on the basis of the page information, and inspecting the website for vulnerabilities on the basis of the at least one of the types.

### [Advantageous Effects of the Invention]

The various embodiments of the present invention assist in inspecting a website for various vulnerabilities.

### [Brief Description of the Drawings]

FIG. 1 is a schematic diagram showing the configuration of a network including a vulnerability inspection server 10 according to an embodiment of the present invention.
FIG. 2 is a diagram illustrating information managed by an inspection rule management table 152.
FIG. 3 is a diagram illustrating information managed by an inspection management table 154.
FIG. 4 is a diagram illustrating information managed by a page information management table 156.
FIG. 5 is a flowchart illustrating a process that the vulnerability inspection server 10 performs when inspecting a website for vulnerabilities.
FIG. 6 is a diagram illustrating a target site setting screen 50.
FIG. 7 is a flowchart illustrating a process that the vulnerability inspection server 10 performs when setting screen transitions.
FIG. 8 is a flowchart illustrating a process that the server 10 performs when performing an inspection under an inspection rule.

### [DESCRIPTION OF EMBODIMENTS]

Now, an embodiment of the present invention will be described with reference to the drawings. In the drawings, the same or similar components may be given the same reference signs.

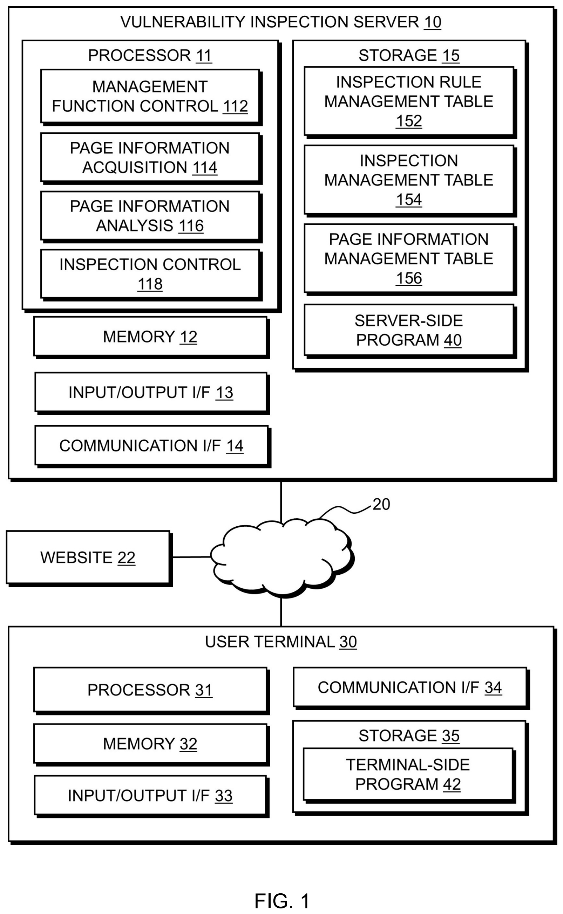

FIG. 1 is a schematic diagram showing the configuration of a network including a vulnerability inspection server 10 according to an embodiment of the present invention. As shown, the server 10 is communicatively connected to a user terminal 30 through a communication network 20 such as the Internet. Although only one user terminal 30 is shown in FIG. 1, the server 10 is communicatively connected to multiple user terminals 30. The vulnerability inspection server 10 provides, to a user who operates the user terminals 30, a vulnerability inspection service in which a website 22 or the like specified by the user is inspected for vulnerabilities (flaws in terms of information security). The vulnerability inspection server 10 is an example of an apparatus that implements all or part of the system of the present invention.

First, the hardware configuration of the vulnerability inspection server 10 will be described. The vulnerability inspection server 10 consists of a general-purpose computer. As shown in FIG. 1, it includes a computer processor 11, main memory 12, an input/output I/F 13, a communication I/F 14, and storage 15. These components are electrically connected through a bus or the like (not shown).

The computer processor 11 consists of a CPU, GPU, or the like. It loads various programs stored in the storage 15 and the like into the main memory 12 and executes various commands included in the programs. The main memory 12 consists of, for example, DRAM or the like.

The input/output I/F 13 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 13 also includes an image output device such as a display and a sound output device such as a speaker.

The communication I/F 14 is implemented as hardware such as a network adapter, any type of communication software, or a combination of these and is configured to perform wired or wireless communication through the communication network 20 or the like.

The storage 15 consists of, for example, a magnetic disk, flash memory, or the like. The storage 15 is storing various programs including an operating system, various types of data, and the like. For example, as shown in FIG. 1, the storage 15 includes an inspection rule management table 152 that manages information on inspection rules used for vulnerability inspections, an inspection management table 154 that manages information on inspects, and a page information management table 156 that manages page information on webpages included in a website to be inspected. These tables may be partially integrated into a single table or divided into multiple tables.

The storage 15 is also storing, for example, a server-side program 40 according to an embodiment of the present invention. The program 40 is a program for causing the server 10 to function as all or part of the system for providing vulnerability inspection services. The server-side program 40 may be configured such that at least part thereof is executed on the user terminal 30 through a terminal-side program 42 (to be discussed later).

In the present embodiment, the vulnerability inspection server 10 may consist of multiple computers each having the above hardware configuration. For example, the server 10 may consist of multiple server devices.

The vulnerability inspection server 10 thus configured can function as a web server and application server, that is, can perform various processes in response to a request from the user terminal 30 and send screen data (e.g., HTML data), control data, and the like corresponding to the results of the processes to the user terminal 30. The user terminal 30 can output thereon webpages or other screens based on the received data.

Next, the hardware configuration of the user terminal 30 will be described. The user terminal 30 consists of a general-purpose computer. As shown in FIG. 1, it includes a computer processor 31, main memory 32, an input/output I/F 33, a communication I/F 34, and storage 35. These components are electrically connected through a bus or the like (not shown).

The computer processor 31 consists of a CPU, GPU, or the like. It loads various programs stored in the storage 35 and the like into the main memory 32 and executes various commands included in the programs. The main memory 32 consists of, for example, DRAM or the like.

The input/output I/F 33 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 33 also includes an image output device such as a display and a sound output device such as a speaker.

The communication I/F 34 is implemented as hardware such as a network adapter, any type of communication software, or a combination of these and is configured to perform wired or wireless communication through the communication network 20 or the like.

The storage 35 consists of, for example, a magnetic disk, flash memory, or the like. The storage 35 is storing various programs including an operating system, various types of data, and the like. The programs stored in the storage 35 can be downloaded and installed from an application market or the like. The storage 35 is also storing the above-mentioned terminal-side program 42. The program 42 consists of a web browser or any other application (for example, a terminal-side application for vulnerability inspection services according to the present embodiment, etc.) and may be configured to execute at least part of the server-side program 40, as described above.

In the present embodiment, the user terminal 30 may consist of a smartphone, tablet terminal, personal computer, or the like.

The user who operates the user terminal 30 thus configured is able to use a vulnerability inspection service provided by the server 10 by communicating with the server 10 through the terminal-side program 42 installed in the storage 35 or the like.

Next, the functions of the vulnerability inspection server 10 configured as described above will be described. As shown in FIG. 1, the computer processor 11 of the server 10 is configured to function as a management function control unit 112, a page information acquisition unit 114, a page information analysis unit 116, and an inspection control unit 118 by executing commands included in a program (e.g., at least a part of the server-side program 40) loaded into the main memory 12.

The management function control unit 112 is configured to perform various processes related to the control of vulnerability inspection service management functions. For example, the management function control unit 112 sends screen data, control data, and the like on various screens related to the management functions to the user terminal 30, performs various processes in response to input made by the user through the screens outputted on the user terminal 30, and sends the screen data, control data, and the like corresponding to the results of the processes to the user terminal 30. The management functions controlled by the management function control unit 112 include, for example, login processing (user authentication), billing control, user account management, and the like.

The page information acquisition unit 114 is configured to acquire page information on multiple webpages included in the website 22 to be inspected. For example, the page information acquisition unit 114 makes visits to these webpages and acquires page information. The visits are made automatically by the page information acquisition unit 114 or manually by the user of the user terminal 30. The acquired page information is managed in, for example, the page information management table 154. The page information includes various types of information on the webpages, such as HTML data and the names and values of request parameters.

The page information analysis unit 116 is configured to perform various processes related to the analysis of the page information. For example, the page information analysis unit 116 is configured to determine at least one of the type (e.g., the meaning, purpose, function, etc.) of the website 22, the type of the webpages, and the type of parameters in the webpages on the basis of the page information on the webpages. These types are determined through, for example, a rule-based model or a machine learning-based model (stored in, for example, the storage 15 or the like). For example, a trained model generated by machine learning is configured to, when receiving the page information, output information for determining the above types. Examples of the trained model includes a large language model.

The inspection control unit 118 is configured to perform various processes for controlling the inspection of the website 22 for vulnerabilities. For example, the inspection control unit 118 is configured to inspect the website 22 for vulnerabilities on the basis of at least one of the type of the website 22, the type of the webpages, and the type of the parameters in the webpages. For example, the inspection control unit 118 inspects the website 22 for vulnerabilities under an inspection rule corresponding to these types (and, more specifically, sends an HTTP request to which an inspection pattern set as an inspection rule is applied, to the website 22 and determines vulnerabilities with respect to a corresponding inspection item on the basis of the contents of an HTTP response received from the website 22). For example, the inspection control unit 118 inspects the website 22 for vulnerabilities under an inspection rule corresponding to a combination of the type of the website 22 and the type of the webpages.

As seen above, the vulnerability inspection server 10 according to the present embodiment determines the type of the website 22, the type of the webpages, and/or the type of the parameters in the webpages on the basis of the page information on each of the multiple webpages included in the website 22 and inspects the website 22 for vulnerabilities on the basis of the type(s). Thus, it is able not only to detect a malfunction caused by a mere invalid input value but also to perform appropriate inspections according to the meaning, purpose, function, or the like of the website, webpages, and/or parameters. In short, the server 10 assists in inspecting the website for various vulnerabilities.

The inspection control unit 118 may be configured to identify a specified type of webpage from among the multiple webpages included in the website 22 and to inspect the website 22 for vulnerabilities by performing a specified operation on that webpage. The specified operation includes various operations for inspecting the website 22 for vulnerabilities and typically involves sending an HTTP request. The inspection control unit 118 thus configured is able to inspect the website 22 for vulnerabilities by performing the specified operation on the specified type of webpage.

In this case, the inspection control unit 118 may be configured to identify an inspection rule corresponding to the type of the website 22 from among predetermined multiple inspection rules and to identify a specified type of webpage corresponding to the identified inspection rule from among the webpages included in the website 22. The type of the website 22 corresponding to each inspection rule is managed in, for example, the inspection rule management table 152. The inspection control unit 118 thus configured is able to inspect the website 22 for vulnerabilities by performing the specified operation on the specified type of webpage corresponding to the inspection rule based on the type of the website 22.

The inspection control unit 118 according to the present embodiment may be configured to identify a specified type of parameter from among multiple parameters in each webpage and to inspect the website 22 for vulnerabilities by performing, on the webpage, a specified operation involving changing the value of the identified parameter. The inspection control unit 118 thus configured is able to inspect the website 22 for vulnerabilities by performing the specified operation involving changing the value of the specified type of parameter.

In this case, the inspection control unit 118 may be configured to inspect the website 22 for vulnerabilities on the basis of page information on a webpage that is the destination of a transition in response to the specified operation on the webpage. For example, the inspection control unit 118 is configured to make a determination as to the result of the specified operation (e.g., as to whether the specified operation has completed normally) on the basis of the page information on the destination webpage and to determine vulnerabilities with respect to the specified operation on the basis of the determination. The inspection control unit 118 thus configured is able to inspect the website 22 for vulnerabilities on the basis of the page information on the webpage that is the destination of the transition in response to the specified operation.

The inspection control unit 118 may also be configured to input the page information on each webpage into a specified trained model and to acquire a vulnerability score(s) indicating the vulnerability(ies) of the website 22 outputted from the specified trained model. For example, the trained model is generated through machine learning using a large amount of training data and is configured to output, when receiving the page information, output the vulnerability score(s) of the corresponding website 22. The trained model is stored in, for example, the storage 15 or the like. The inspection control unit 118 thus configured is able to acquire the vulnerability score(s) using the page information and the trained model.

In this case, the inspection control unit 118 may be configured to, when the vulnerability score of one webpage is lower than a threshold, use the score as the inspection result and to, when the vulnerability score is equal to or higher than the threshold, inspect the website 22 for vulnerabilities by performing a specified operation on the webpage. The inspection control unit 118 thus configured is able to, when the vulnerability score of one webpage is low (the severity of vulnerability of the webpage is low), avoid inspecting the website 22 by performing the specified operation on the webpage.

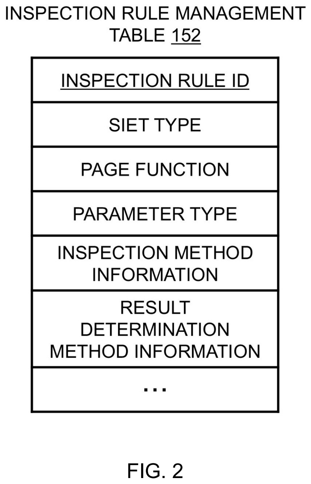

Next, a specific example as one aspect of the vulnerability inspection server 10 having these functions will be described. In this example, first, information managed by each table will be described. FIG. 2 illustrates information managed by the inspection rule management table 152 in this example. The inspection rule management table 152 in this example manages information on inspection rules applied to vulnerability inspections. Specifically, as shown, it manages information such as a "site type" that indicates the type of a website to which a specific inspection rule is applied, a "page function" that indicates the function (type) of a webpage to which the specific inspection rule is applied, a "parameter type" that indicates the type of a parameter to which the specific inspection rule is applied, "inspection method information" that is information on an inspection method, and "result determination method information" that is information on an inspection result determination method such that these pieces of information are associated with an "inspection rule ID" that identifies the specific inspection rule. These pieces of information are previously set by a vulnerability inspection service provider.

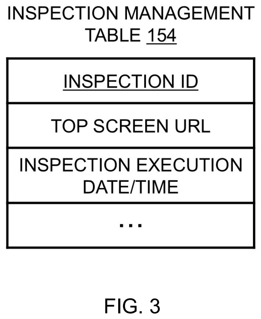

FIG. 3 illustrates information managed by the inspection management table 154 in this example. In this example, the inspection management table 154 manages information on specific inspection cases. Specifically, as shown, it manages information such as a "top screen URL" that is the URL of a top screen (top page) serving as the starting point of a specific inspection (case) performed on a website to be inspected and an "inspection execution date/time" that is the date and time of execution of the specific inspection such that these pieces of information are associated with an "inspection ID" that identifies the specific inspection.

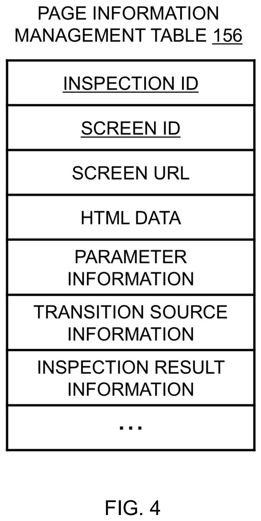

FIG. 4 illustrates information managed by the page information management table 156 in this example. In this example, the page information management table 156 manages information on screens included in screen transitions for an inspection among the multiple screens (webpages) of a website to be inspected. Specifically, as shown, it manages information such as a "screen URL" that is the URL of a specific screen of the website to be inspected, "HTML data" of the specific screen, "parameter information" that is information (the name and value) on a request parameter sent upon transition to the specific screen, "transition source information" that is information on the transition source of the specific screen in the screen transitions (the screen ID of the transition source screen, the element ID of the element of the transition source screen, and the like), and "inspection result information" that is information on the inspection results of the specific screen such that these pieces of information are associated with a combination of an "inspection ID" that identifies a specific inspection and a "screen ID" that identifies the specific screen in the website to be inspected. In this example, the screen transitions for an inspection are automatically set by the server 10. This will be described in detail later.

The information managed by the tables in this example has been described above. Next, processes performed by the vulnerability inspection server 10, screens outputted on the user terminal 30, and the like in this example will be described.

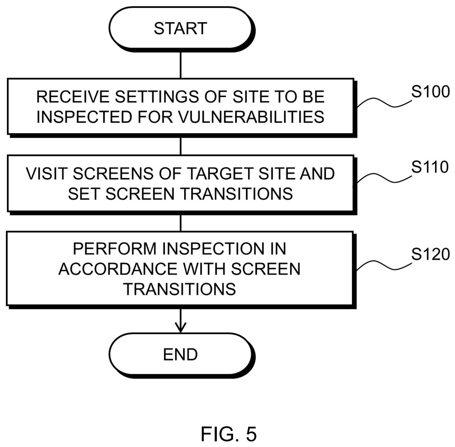

FIG. 5 is a flowchart illustrating a process that the vulnerability inspection server 10 performs when inspecting a website for vulnerabilities in this example. As shown, the server 10 first receives the settings of the website to be inspected for vulnerabilities (step S100). The server 10 receives the settings through a screen outputted on the user terminal 30.

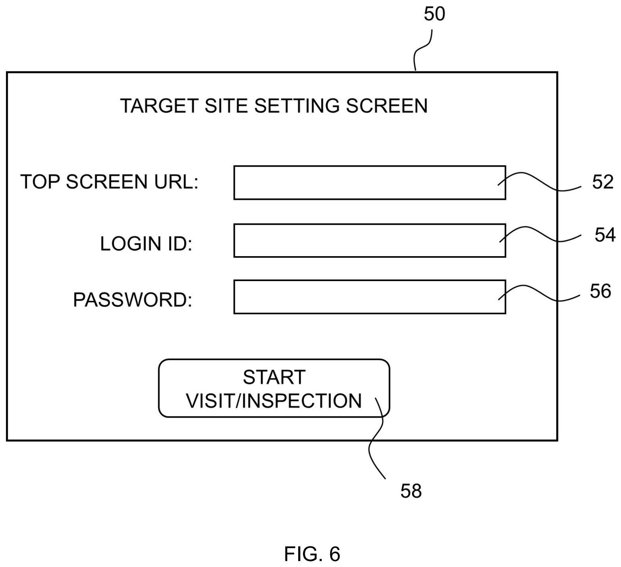

FIG. 6 illustrates a target site setting screen 50 for receiving the settings of a website to be inspected, outputted on the user terminal 30. As shown, the screen 50 includes a URL input field 52 for entering the URL of the top screen (the top page) of the website to be inspected, a login ID input field 54 for entering a login ID used to log in to the website, a password input field 56 for entering a password used to log in to the website, and a continue button 58 labeled "Start visit/inspection". Thus, in this example, the URL of the top screen, login ID, and password are received as the setting information of the website to be inspected.

The continue button 58 is an object for instructing the server 10 to visit (set screen transitions in) and inspect the website to be inspected. Referring back to the flowchart of FIG. 5, when the continue button 58 is selected, the server 10 then visits the website to be inspected and sets screen transitions for an inspection (step S110).

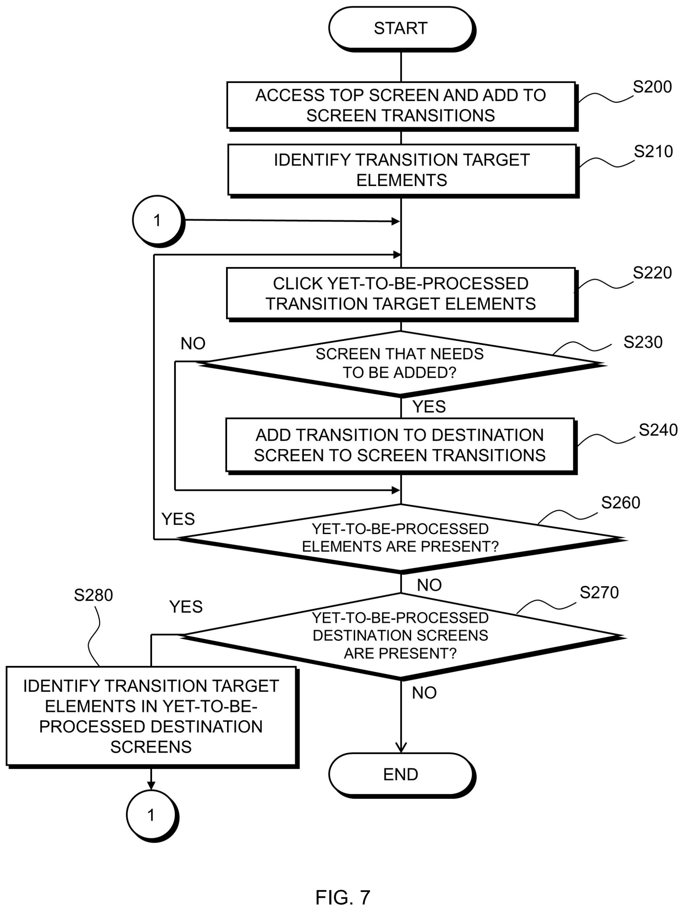

FIG. 7 is a flowchart illustrating a process that the server 10 performs when setting screen transitions. As shown, the server 10 first accesses the top screen of the website to be inspected and adds the top screen to screen transitions (step S200). Specifically, the server 10 launches a web browser and accesses the top screen identified by a URL entered through the target site setting screen 50. The server 10 also registers information on the top screen in the page information management table 156 and, more specifically, sets an inspection ID, a screen ID, the screen URL, HTML data, and parameter information therein.

The server 10 then identifies multiple transition target elements included in the top screen (step S210). Specifically, screen components (such as buttons, images, text, and the like) on which links, script, or the like are set are identified as transition target elements.

The server 10 then clicks each identified element (step S220). If the destination screen of a transition in response to a click on any element is a screen that needs to be added to the screen transitions (YES in step S230), the transition to the destination screen is added to the screen transitions (step S240). Specifically, the server 10 registers information on the destination screen in the page information management table 156 and, more specifically, sets the inspection ID, a screen ID, a screen URL, HTML data, parameter information, and transition source information therein. The screen ID identifying the top screen, which is a transition source, and element ID identifying the clicked element are set as the transition source information.

If, in this example, a required input item is present when clicking any transition target element, a previously prepared input value (including a combination of the login ID and password inputted through the target site setting screen 50) is automatically set.

In contract, if the destination screen of the transition in response to the click on the element is a screen that does not need to be added to the screen transitions (NO in step S230), the server 10 does not add the transition to the screen to the screen transitions.

In this example, the following two types screens are determined as screens that do not need to be added to the screen transitions:
(1) the screens of sites outside the website to be inspected; and
(2) a screen(s) that overlaps screens already included in the screen transitions.

With respect to (2), whether two screens overlap each other is determined on the basis of the similarity between these screens in this example. Specifically, when the similarity is equal to or higher than a threshold, it is determined that the two screens overlap each other. The similarity can be calculated using various criteria, for example, can be calculated on the basis of comparisons between the contents, URLs, and URL parameters of the screens (pages).

When, with respect to each of the multiple transition target elements included in the top screen, the server 10 determines whether a transition to a destination screen in response to a click on the element needs to be added to the screen transitions (NO in step S260), the server 10 then identifies multiple transition target elements included in each of screens added to the screen transitions (step S280), as in the top screen, and determines whether a transition to a destination screen in response to a click on each element needs to be added to the screen transitions (steps S220 to S260). This process is repeated until a new screen is no longer added to the screen transitions (NO in step S270).

Referring back to the flowchart of FIG. 5, when the screen transitions are set as seen above, the server 10 then inspects the website to be inspected for vulnerabilities in accordance with the set screen transitions (step S120). Specifically, it launches a web browser, sequentially visits the screens included in the screen transitions in accordance with the information managed in the page information management table 156, and inspects the website for predetermined vulnerability inspection items. The vulnerability inspection items include, for example, items defined in the OWASP Top 10. The inspection results are registered in the inspection result information in the page information management table 156.

In this example, each inspection is performed for the predetermined inspection items under an inspection rule according to the nature of the inspection. The inspection rules are managed in the inspection rule management table 152 and include, for example, the following inspection rules.
[Rule 1] Site type: e-commerce site
   Page function: product purchase screen
   Parameter type: product price
   Inspection method: numerical change (multiply by 0.5)
   Result determination method: price information on completion screen
[Rule 2] Site type: SNS site
   Page function: private message screen
   Parameter type: message ID
   Inspection method: numerical change (decrease by 1)
   Result determination method: message information of user themself on the same screen
[Rule 3] Site type: SNS site
   Page function: post content edit screen
   Parameter type: post ID
   Inspection method: numerical change (decrease by 1)
   Result determination method: post information on post content view screen
[Rule 4] Site type: all
   Page function: password change screen
   Parameter type: password value
   Inspection method: use of vulnerability score from trained model
[Rule 5] Site type: all
   Page function: data deletion screen
   Parameter type: data ID
   Inspection method: use of vulnerability score from trained model

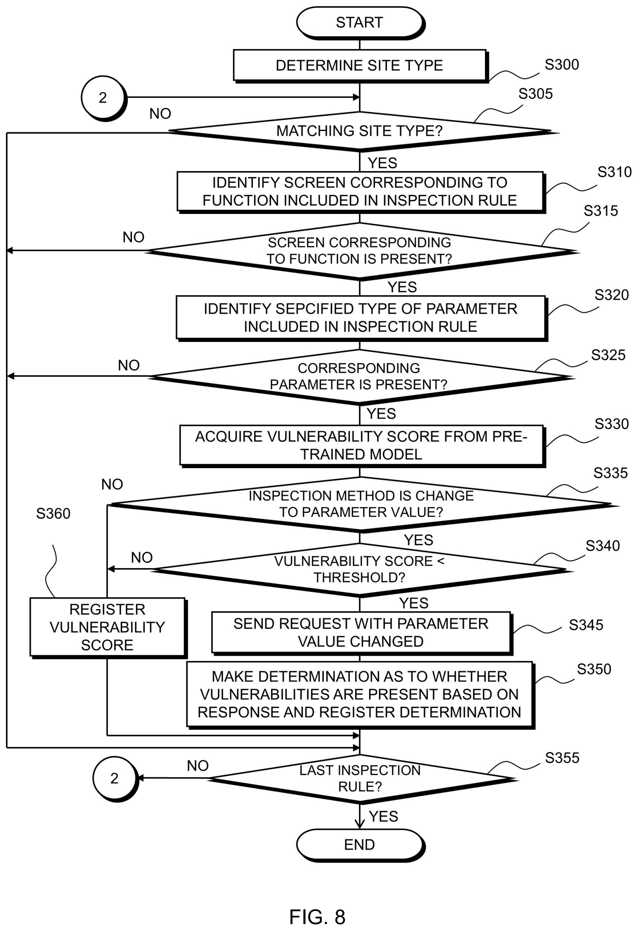

FIG. 8 is a flowchart illustrating a process that the server 10 performs when performing an inspection under an inspection rule. As shown, the server 10 first determines the site type of the website to be inspected (step S300). In this example, the server 10 determines the site type using a trained model for determining the site type of a website. The trained model is generated through machine learning using a large amount of training data and is configured to, when receiving page information (HTML data and parameter information) on each of multiple webpages included in the website, output scores indicating the respective probabilities of predetermined multiple site types (e.g., e-commerce site, SNS site, etc.). The server 10 inputs the page information (HTML data and parameter information) on the screens included in the screen transitions set on the website (inspection) into the trained model and determines that a site type having the highest score outputted from the trained model is the site type of the website to be inspected. The page information on the screens is managed in the page information management table 156.

If the determined site type matches a site type set in a target inspection rule (identified from multiple inspection rules in accordance with a specified order) (YES in step S305), the server 10 identifies a screen corresponding to a function set in the target inspection rule from among the multiple screens included in the screen transitions (step S310) . In contrast, if the determined site type does not match the site type set in the target inspection rule (NO in step S305), the website is a website to which the inspection rule is not applied and therefore an inspection based on the inspection rule is skipped.

In this example, as with the site type, the function of each screen is determined using a trained model for determining the function of screens. The trained model is generated through machine learning using a large amount of training data and is configured to, when receiving page information on the screens, output scores indicating the respective probabilities of multiple functions (e.g., a product purchase screen, a private message screen, a post content edit screen, a password change screen, a data deletion screen, etc.). The server 10 determines that a function having the highest score outputted from the trained model among the multiple functions is the function of each screen. The server 10 then identifies a screen having a function set in the inspection rule from among the multiple screens.

If a screen corresponding to the target inspection rule (a screen having the function set in the inspection rule) is present (YES in step S315), the server 10 identifies a specified type of parameter included in the inspection rule from among multiple parameters in that screen (step S320). In contrast, if a screen corresponding to the inspection rule is not present (NO in step S315), the website is a website to which the inspection rule is not applied and therefore an inspection based on the inspection rule is skipped.

In this example, the specified type of parameter is identified using a trained model for determining a specified type of parameter (e.g., a product price, a message ID, a post ID, a password value, a data ID, etc.). The trained model is generated through machine learning using a large amount of training data and is configured to, when receiving page information on each screen and the names (e.g., item_price, message_id, post_id, password, data_id, etc.) of parameters included in the screen, output scores indicating the probabilities that parameters whose names have been received are the specified type of parameter. The server 10 determines that, of the multiple parameters included in each screen, a parameter whose score outputted from the trained model is equal to or higher than a threshold is the specified type of parameter.

If the specified type of parameter corresponding to the inspection rule is present (YES in step S325), the server 10 acquires a vulnerability score from a trained model (step S330). The trained model is generated through machine learning using a large amount of training data and is configured to, when receiving page information on each screen, output a score indicating the vulnerabilities of the screen.

In contrast, if the specified type of parameter is not present (NO in step S325), the website is a website to which the inspection rule is not applied and therefore an inspection based on the inspection rule is skipped.

After acquiring the vulnerability score through the trained model in S330, the server 10 determines whether an inspection method set in the inspection rule is a change to the parameter value. If the inspection method is not a change to the parameter value (NO in step S335), or if the inspection method is a change to the parameter value (YES in step S335) but the acquired vulnerability score is lower than a threshold (NO in step S340), the server 10 records the vulnerability score as the inspection results (step S360). Specifically, the server 10 registers the vulnerability score as the inspection result information of the corresponding screen in the page information management table 156. Note that, of Rules 1 to 5 described above as examples of inspection rules, Rules 4 and 5 correspond to the case in which the set inspection method is not a change to the parameter value (that is, in this example, "the case in which the inspection method is not a change to the parameter value" can be said to be "the case in which the inspection method is use of the vulnerability score from the trained model").

In contrast, if the inspection method set in the inspection rule is a change to the parameter value (YES in step S335) and if the acquired vulnerability score is equal to or higher than the threshold (YES in step S340), the server 10 sends a request with the parameter value changed (step S345). The contents of a change to the parameter value are previously set in the inspection method information in the inspection rule. For example, in Rule 1, "product price" is set as the parameter type, and a numerical change of "multiply by 0.5" is set as the inspection method. For this reason, the server 10 sends, for example, a request with a product price of "1000 yen" in the page information on the corresponding screen changed to "500 yen". The sending of such a request can be said to be execution of a product purchase process. For example, in Rule 2, a "message ID" is set as the parameter type, and a numerical change of "decrease by 1" is set as the inspection method. For this reason, the server 10 sends, for example, a request with a message ID of "12345" in the page information on the corresponding screen changed to "12344". The sending of such a request can be said to be execution of a message sending process. For example, in Rule 3, a "post ID" is set as the parameter type, and a numerical change of "decrease by 1" is set as the inspection method. For this reason, the server 10 sends, for example, a request with a post ID of "987" in the page information on the corresponding screen changed to "986". The sending of such a request can be said to be execution of a post content edit process.

The server 10 then makes a determination as to whether vulnerabilities are present on the basis of a response from the website and registers the determination (step S350). The determination as to whether vulnerabilities are present is made on the basis of the result determination method information in the inspection rule. For example, in the case of Rule 1, if it is confirmed on the destination product purchase completion screen based on the response that the changed product price has been normally processed, it is determined that vulnerabilities are present. For example, in the case of Rule 2, if it is confirmed on the destination private message screen based on the response that the changed message (a message of another user) has been normally processed, it is determined that vulnerabilities is present. For example, in the case of Rule 3, if it is confirmed on the destination post content view screen based on the response that the changed post (a post of another user) has been normally processed, it is determined that vulnerabilities is present. These determinations are registered as the inspection result information of the corresponding screens in the page information management table 156.

As seen above, in this example, when the inspection method set in the inspection rule is not a change to the parameter value (i.e., when the inspection method is use of the vulnerability score from the trained model), the vulnerability score acquired from the trained model is used as the inspection results. Such an inspection, in which the vulnerability score is acquired, can suppress the impact on the production environment or other environments such as the development environment and reduce the inspection time compared to an inspection involving sending a request with the parameter value changed. For example, with respect to an inspection rule that can impact the production environment or the like, an inspection method that is not a change to the parameter value is previously set therein.

For example, in the case of Rule 4, if an inspection involving setting "' or 1=1 --" or the like as the parameter value of the password value on the password change screen and sending a request (an SQL injection inspection) is performed, an impact such as a change to the password of another user can occur. For example, in the case of Rule 5, if an inspection involving changing (e.g., decreasing by 1) the parameter value of the data ID on the data deletion screen and sending a request is performed, an impact such as deletion of data being used for a purpose other than an inspection, actual data on another user, or the like can occur.

In this example, when the inspection method set in the inspection rule is a change to the parameter value but the vulnerability score acquired from the trained model is lower than the threshold, the vulnerability score is used as the inspection results. In other words, an inspection involving sending a request with the parameter value changed is performed only when the severity of the vulnerabilities is high (i.e., the score is relatively high).

The server 10 records the vulnerability score (step S360) or registers the vulnerability determinations (step S350). The server 10 then determines whether yet-to-be-processed inspection rules are present. If yet-to-be-processed inspection rules are present (NO in step S355), the server 10 returns to step S305 and performs an inspection on the basis of the site type, screen function, and parameter type under one of those inspection rules. Such an inspection is repeated until it is performed under the last inspection rule (YES in step S355).

In the above example, inspection rules may be set using a natural language (e.g., a statement reading, "A request parameter including the price of a product is identified on the product purchase screen of an e-commerce site; a request with this value altered is sent; and if the purchase of the product at the altered price is normally processed, it is reported that vulnerabilities are present"). In this case, the inspection rules set in the natural language may be analyzed through a large language model (LLM) or the like.

While, in the above example, the site type, screen function, and parameter type are determined through the trained model, these types may be determined through a large language model (LLM).

While, in the above example, the vulnerability score is acquired from the trained model, a large language model (LLM) capable of outputting a vulnerability score, as well as the basis for calculating the vulnerability score (a constraint such as "except for the case of xxx", etc.) may be used.

As described above, the vulnerability inspection server 10 according to the present embodiment determines the type(s) of the website 22, the multiple webpages included in the website 22, and/or the parameters in the webpages on the basis of the page information on each of the webpages and inspects the website 22 for vulnerabilities on the basis of the type(s). Thus, it is able not only to detect a malfunction caused by an invalid input value but also to perform appropriate inspections according to the meaning, purpose, function, or the like of the website, webpages, and/or parameters. In short, the server 10 assists in inspecting the website for various vulnerabilities.

In another embodiment of the present invention, some or all of the functions of the vulnerability inspection server 10 according to the above embodiment may be performed by collaboration of the vulnerability inspection server 10 and user terminal 30 or by the user terminal 30.

The processes and procedures described in the present specification may be performed by software, hardware, or any combination thereof other than those described explicitly. For example, the processes and procedures described in the present specification may be performed by implementing logic corresponding to the processes and procedures in a medium such as an integrated circuit, volatile memory, non-volatile memory, or magnetic disk. The processes and procedures described in the present specification may also be implemented as a computer program corresponding to those and performed by various types of computers.

Even when it is stated that the processes and procedures described in the present specification are performed by a single apparatus, software, component, or module, those processes or procedures may be performed by multiple apparatuses, multiple types of software, multiple components, and/or multiple modules. The software and hardware components described in the present specification may be implemented by integrating them into less components or by decomposing them into more components.

When the components of the invention are described in a singular or a plural form in the present specification or even when the components are described without specifying a singular form or plural form, the components may be singular or plural unless the number of each component should be interpreted otherwise in the context.

## Claims

1. A system for inspecting a website for vulnerabilities, the system comprising one or more computer processors,
wherein the one or more computer processors perform operations comprising:
acquiring page information on a webpage included in the website;
determining at least one of a type of the website, a type of the webpage, and a type of a parameter in the webpage on the basis of the page information; and
inspecting the website for vulnerabilities on the basis of the at least one of the types.

2. The system of claim 1, wherein the determining comprises determining the at least one of the types using a first trained model configured to, when receiving the page information, output information for determining the at least one of the types.

3. The system of claim 1,
wherein the determining comprises determining at least the type of the webpage, and
wherein the inspecting comprises identifying a specified type of webpage from among webpages included in the website as the webpage and inspecting the website for vulnerabilities by performing a specified operation on the webpage.

4. The system of claim 3,
wherein the determining comprises determining at least the type of the website and the type of the webpage,
wherein the one or more computer processors further perform an operation comprising identifying a first inspection rule corresponding to the type of the website from among a plurality of predetermined inspection rules, and
wherein the inspecting comprises identifying the specified type of webpage corresponding to the first inspection rule from among a plurality of webpages included in the website as the webpage.

5. The system of claim 1,
wherein the determining comprises determining at least the type of the parameter, and
wherein the inspecting comprises identifying a specified type of first parameter from among a plurality of parameters in a first webpage included in the website and inspecting the website for vulnerabilities by performing, on the first webpage, a specified operation involving changing a value of the first parameter.

6. The system of claim 5, wherein the inspecting comprises inspecting the website for vulnerabilities on the basis of the page information on a second webpage that is a destination of a transition in response to the specified operation on the first webpage.

7. The system of claim 1, wherein the one or more computer processors further perform an operation comprising inputting the page information to a second trained model and acquiring a score indicating a vulnerability of the website outputted from the second trained model.

8. The system of claim 7, wherein the inspecting comprises if the score is lower than a threshold, using the score as an inspection result and if the score is equal to or higher than the threshold, inspecting the website for vulnerabilities by performing a specified operation on the webpage.

9. A method for inspecting a website for vulnerabilities, the method being performed by one or more computers, the method comprising:
acquiring page information on a webpage included in the website;
determining at least one of a type of the website, a type of the webpage, and a type of a parameter in the webpage on the basis of the page information; and
inspecting the website for vulnerabilities on the basis of the at least one of the types.

10. A program for inspecting a website for vulnerabilities, the program causing one or more computers to perform operations comprising:
acquiring page information on a webpage included in the website;
determining at least one of a type of the website, a type of the webpage, and a type of a parameter in the webpage on the basis of the page information; and
inspecting the website for vulnerabilities on the basis of the at least one of the types.
